# EUROPEAN PATENT SPECIFICATION

(11) **EP 2 815 639 B1**
(45) Date of publication and mention of the grant of the patent: **20.04.2016**
(21) Application number: 13173122.6
(22) Date of filing: 20.06.2013
(51) Int. Cl.: A01D 89/00, A01D 80/02

(54) **Pick-up tine bracket with flange**
Aufnehmerzinkenhalterung mit Flansch
Support de dent de ramassage avec bride

(43) Date of publication of application: 24.12.2014
(73) Proprietor: CNH Industrial Belgium nv, 8210 Zedelgem (BE)
(72) Inventor: McClure, John, R., New Holland, Pennsylvania 17557 (US); Singh, Chandrashekhar, Lancaster, Pennsylvania 17602 (US)
(74) Representative: CNH Industrial IP Department

(56) References cited:
- EP-A1- 2 384 616
- GB-A- 2 059 739
- US-A- 3 014 335
- US-A1- 2011 225 942

## Description

### BACKGROUND OF THE INVENTION

This invention relates generally to an agricultural pickup assembly having tines passing within tine guards and, more particularly, to a pickup tine mounting bracket with a flange.

Pick-up assemblies used in agricultural harvesting machines typically include a reel that is rotatable about a horizontal central axis. The reel comprises a plurality of parallel tine bars arranged for movement in a generally circular path around the central axis. Individual tines are connected to the bars and extend generally radially outwardly to lift crop material from the ground and convey it into a crop processing mechanism. The tine bars are connected to a central shaft by end plates, and as the reel rotates, the tines project through spaces or gaps formed between tine guards arranged side-by-side transversely of the reel. These tine guards are individually secured at their top and bottom ends to support members on the pickup.

Tines typically include a coiled spring portion adjacent to their mounting on the tine bar to allow the tine to flex upon contact with an immoveable object rather than breaking the tine. These springs ideally allow fore-aft tine movement. The tines may experience significant lateral loads during operation which causes spring deflection and may allow detrimental tine contact with the tine guards. Stiffening the springs sufficiently to withstand lateral loads without excessive deflection results in spring stiffness that is greater than necessary for the anticipated fore-aft loadings. Increased wire size, a common way to stiffen the springs, decreases tine fore-aft deflection cycle life (the primary tine movement orientation). Larger wire also requires greater lateral space for the tines which could require significant alteration of the pick-up assembly and is thus often impractical.

A device according to the preamble of claim 1 is known from US 2011/0225942.

It would be advantageous to provide a modified mounting bracket for mounting tines to a tine bar that reinforces the tine spring coils to reduce lateral tine deflection without increasing the spring stiffness in the longitudinal (fore-aft) direction. Additional advantages would be realized by a modified tine mounting bracket that allows connection of exiting tine configurations to existing tine bar configurations with little or no modification of either. Still further advantages would be realized if the modified tine mounting bracket can be produced more economically than modifying the tine spring coil to accomplish the same objective.

### SUMMARY OF THE INVENTION

Accordingly, the present invention, in any of the embodiments described herein, may provide one or more of the following advantages:
It is an object of the present invention to provide an improved tine mounting bracket for a pick-up reel that increases lateral tine stiffness.

It is a further object of the present invention to provide an improved tine mounting bracket for a pick-up reel that increases lateral tine stiffness without affecting the longitudinal tine stiffness or requiring alteration of the tine spring, either through increased diameter spring wire or variation in the spring coil configuration.

It is a further object of the present invention to provide an improved tine mounting bracket for a pick-up reel that is suitably robust for application in an agricultural pick-up reel.

It is a further object of the present invention to provide an improved tine mounting bracket for a pick-up reel that is compatible with existing tine and tine bar configurations and may be used without altering the tine or tine bar design.

It is a further object of the present invention to provide and improved tine mounting bracket for a pick-up reel that provides lateral restraint of tine springs to reduce tine finger deflection in both lateral directions.

It is a still further object of the present invention to provide an improved tine mounting bracket for a pick-up reel that enables tines to be easily installed on a tine bar.

It is a still further object of the present invention to provide an improved tine mounting bracket for a pick-up reel that is durable in construction, inexpensive of manufacture, carefree of maintenance, easily assembled, and simple and effective to use.

These and other objects are achieved in accordance with the present invention by providing a tine mounting bracket for connecting tines to tine bars on an agricultural pick-up reel. The tines include a coiled spring section at the base of the tine and adjacent to the tine bar connection. The improved mounting bracket includes a flange that extends in adjacent contact with a portion of the coiled spring section and inhibits lateral deflection of the tine spring.

### BRIEF DESCRIPTION OF THE DRAWINGS

The advantages of this invention will be apparent upon consideration of the following detailed disclosure of the invention, especially when taken in conjunction with the accompanying drawings wherein:
FIG. 1 is a partial perspective view of a tine reel for an agricultural pick-up assembly of the type on which the present invention is useful;
FIG. 2 is a detail view of a tine connection to a tine bar of the tine reel of FIG. 1;
FIG. 3 is an elevation view of the tine connection shown in FIG. 2; and
FIG. 4 is a section view of the tine connection of FIG. 3 taking along cut line 4 - 4.

### DESCRIPTION OF THE PREFERRED EMBODIMENT(S)

Many of the fastening, connection, processes and other means and components utilized in this invention are widely known and used in the field of the invention described, and their exact nature or type is not necessary for an understanding and use of the invention by a person skilled in the art, and they will not therefore be discussed in significant detail. Also, any reference herein to the terms "left" or "right" are used as a matter of mere convenience, and are determined by standing at the rear of the machine facing in its normal direction of travel. Likewise, "forward" and "rearward" are determined by the normal direction of travel. "Upward" and "downward" orientations are relative to the ground or operating surface as are any references to "horizontal" or "vertical" planes. Furthermore, the various components shown or described herein for any specific application of this invention can be varied or altered as anticipated by this invention and the practice of a specific application of any element may already be widely known or used in the art by persons skilled in the art and each will likewise not therefore be discussed in significant detail. When referring to the figures, like parts are numbered the same in all of the figures.

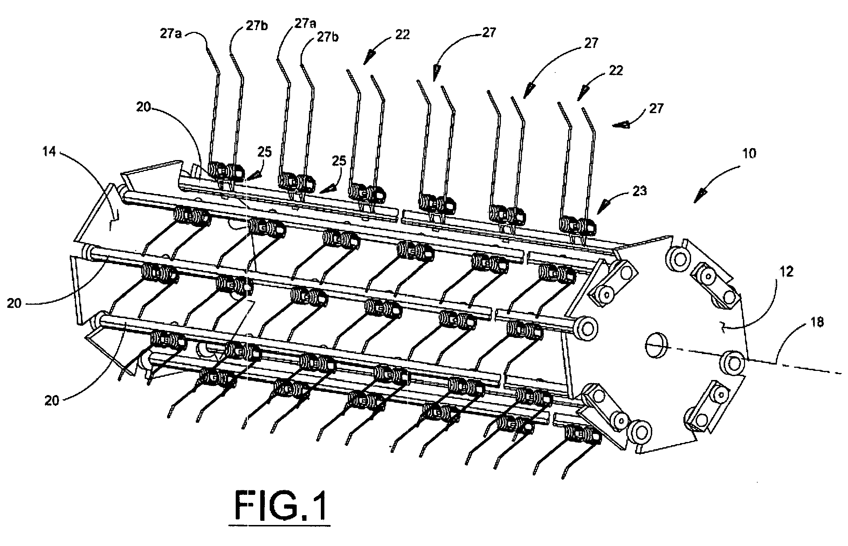

Referring to the figures and FIG. 1 in particular, a pick-up tine reel 10 for an agricultural machine, such as a baler, is shown comprising a pair of spaced-apart end plates 12, 14 configured for rotation about a generally horizontal rotational axis 18, to which are connected a plurality of transverse tine bars 20 spanning between the end plates. The tine bars 20 are radially distanced from the rotational axis 18 and distributed around a rotational circumference of the tine reel 10. The end plates12, 14 are rotated by conventional drive means within the machine, such as chains and sprockets (not shown), thereby moving the tine bars 20 in an orbital path about the rotational axis 18. A plurality of tines 22 connected to each of the tine bars 20 and extending generally radially therefrom is arranged to lift crop material from the ground as the tine reel 10 is rotated and direct such crop material into the machine for processing. The tine bars 20 may further be individually rotated about their longitudinal axes by mechanisms in the tine reel 10 in order to vary the degree of outward tine extension from the tine reel.

As the tine reel 10 is rotated, the plurality of tines 22 is subjected to primarily longitudinal fore-aft forces as the crop material is engaged and lifted from the ground. It is known to provide a spring 23 disposed between each tine mount 25 and the tine finger 27 to allow the tine to flex without damaging the tine, tine bar, or drive elements in the tine reel. It is common for each tine 27 to include a pair of tine fingers 27a, 27b sharing a single tine mount 25 to improve assembly efficiency.

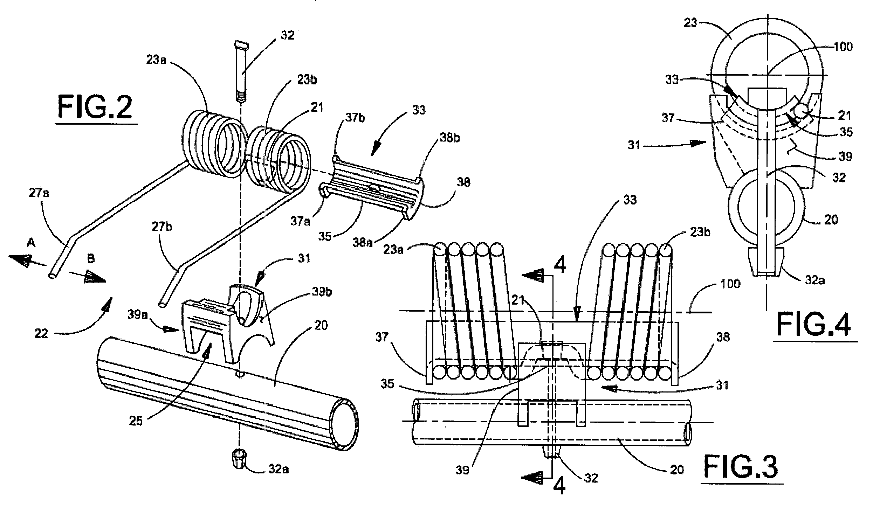

Referring to FIGS. 2 through 4, details of each tine 22 connection to the tine bar 20 are shown using tine mount 25. Each tine mount 25 includes a mounting bracket 31 which is connected to the tine bar 20 by a connector 32, 32a, such as a bolt and nut. In the preferred embodiment shown, each tine 22 includes a mounting loop 21 from which extend first and second tine fingers 27a, 27b to reduce the number of tine mounts 25 necessary for a given number of tine fingers on the reel. Springs 23a, 23b are provided on each tine finger 27a, 27b to allow the tine fingers 27a, 27b to move relative to the tine mount 25 without damaging the tine, tine mount, or tine bar. Springs 23a, 23b are helically coiled from the wire forming the tine about an axis 100 generally parallel to the tine bar when the tines are operably mounted and spaced apart by the mounting loop 21 a distance sufficient for the mounting bracket 31 to fit between the springs 23a, 23b. Multiple turns of the coils wound in adjacent contact (close-wound spring) typically provide the require spring flexibility for the tine. Each tine is preferably shaped from a single length of solid wire. A portion of the inward face of each spring coil is in adjacent contact with respective side faces 39a, 39b of the mounting bracket 31.

Each tine 22 is held in position in the mounting bracket 31 by a mounting clamp 33 held in position on the tine bar by a single, shared connector 32, 32a for ease of assembly and tine replacement. Mounting clamp 33 comprises a contoured clamping surface 35 which matches an interfacing contour in the mounting bracket 31 to clamp the tine 22 in a fixed position therebetween. Mounting clamp 33 also includes a pair of opposing flanges 37, 38 disposed on the outboard ends of the clamp. Flanges 37, 38 are positioned in adjacent contact with the outward face of each spring coil when operably assembled.

Flanges 37, 38 extend circumferentially around each spring 23a, 23b, when operably assembled, between a first end 37a, 38a and a second end 37b, 38b, respectively. The degree of spring circumferential coverage by flanges 37, 38 is maximized to inhibit lateral movement of the tine fingers (shown in FIG. 2 as movement direction arrows "A" and "B") while maintaining the circumferential distance between the first 37a, 38a and second ends 37b, 38b small enough to enable the mounting clamp 33 to be inserted through the interior of the spring coils 23a, 23b. As shown in FIG. 2, movement of the tine finger 27a in the "A" direction causes the portion of spring coil 23a adjacent to flange end 37a to move outwardly away from the tine bracket face 39a. Flange end 37a is positioned to inhibit spring coil movement in the direction. Similarly, movement of the tine finger 27a in the "B" direction causes the portion of spring coil 23a adjacent to flange end 37b to move outwardly away from the tine bracket face 39a. Flange end 37b is positioned to inhibit spring coil movement in the direction. The combination of the flanges 37, 38 and the mounting bracket side faces 39a, 39b laterally restrain a portion of the spring coils 23a, 23b so that the springs are inhibited from extending in a direction parallel to the tine bar (and coil) axis 100. Laterally restraining the spring coils reduces the degree of lateral deflection of the tine fingers 27 in both lateral directions, effectively stiffening the tine spring in the lateral direction without affecting the spring rate in the longitudinal (tine finger rotation about the spring coil axis) direction.

Naturally, the invention is not limited to the foregoing embodiments, but it can also be modified in many ways without departing from the scope of the claims.

## Claims

1. A pick-up tine reel (10) for an agricultural machine comprising:
first (12) and second (14) spaced apart and generally opposing end plates arranged for rotation about a common, laterally aligned axis (18);
at least one tine bar (20) spanning between said first and second end plates for rotation therewith to define a generally cylindrical rotational path;
a plurality of tines (22) connected to said tine bar (20), each tine (22) having a mounting loop (21) for attachment to said tine bar (20), a tine finger (27, 27a, 27b), and a spring coil (23, 23a, 23b) disposed therebetween, said spring coil being coiled about an axis (100) generally parallel to said common axis (18); the pick-up tine reel (10) further comprising a tine mounting bracket (25) for connecting each of said plurality of tines (22) to said tine bar (20), said mounting bracket (25) comprising a first portion (31) and a second portion (33) configured to matingly engage and clamp said mounting loop (21) in a fixed position therebetween, **characterized in that** said first portion (31) has a first side surface (39) oriented for adjacent contact with a first side of said spring coil, and said second portion (33) has a restraining surface (37, 38) oriented for adjacent contact with a second side of said coil spring opposite of said first side wherein movement of each said tine finger is laterally inhibited.

2. The pick-up reel of Claim 1, wherein said second portion (33) includes a first end (37) and a second end (38), said first end (37) inhibiting lateral deflection of each said tine finger (27, 27a, 27b) in a first lateral direction (A), said second end (38) inhibiting lateral deflection of each said tine finger (27, 27a, 27b) in a lateral direction (B) opposite said first lateral direction (A).

3. The pick-up reel of any of the previous claims, wherein said mounting loop (21), said spring coil (23, 23a, 23b), and said tine finger (27, 27a, 27b) are formed from a continuous elongate member.

4. The pick-up reel of any of the previous claims, wherein said spring coil (23) is a helically wound coil (23a, 23b) having a circumference, and said restraining surface (37,38) of said second portion (33) is in adjacent contact with said second side of said coil spring (23) and extends partially around said circumference yet allowing said second portion (33) to be passed through the interior of said helically wound coil (23) when installing.

5. The pick-up reel of any of the previous claims, wherein each of said plurality of tines (22) further comprises first (27a) and second (27b) tine fingers and first (23a) and second (23b) spring coils, said first (23a) and second (23b) spring coils being connected by said mounting loop (21), said first side surface (39a, 39b) of said first portion (31) of said mounting bracket (25) being arranged to fit between and in adjacent contact with inward-facing surfaces of said first (23a) and said second (23b) spring coils, and said second portion (33) of said mounting bracket (25) having first (37) and second (38) retaining surfaces oriented for adjacent contact with outward-facing surfaces of said first (23a) and said second (23b) spring coils.

6. The pick-up reel of claim 5, wherein said first portion of said tine mounting bracket (25) is a tine bar bracket (31) having a receptacle configured to receive a portion of said mounting loop (21) disposed between generally parallel and spaced-appart first (39a) and second (39b) side surfaces, said side surfaces being arranged to fit between and in adjacent contact with inward-facing surfaces of said first (23a) and said second (23b) spring coils.

7. The pick-up reel of claim 5 or 6, wherein said second portion of said tine mounting bracket (25) is a tine clamp bracket (33) having a first (37) and second (38) restraining surfaces oriented for adjacent contact with outward-facing surfaces of said first (23a) and said (23b) second spring coils.

8. The pick-up reel of claim 7, wherein the mounting bracket (25) further comprises a fastener (32, 32a) fixing said tine bar bracket (31) and said tine clamp bracket (33) to said tine bar (20) with said mounting loop (21) clamped in said receptacle by said tine clamp bracket (33), said first (39a) and second (39b) side surfaces of said tine bar bracket (31) and said first (37) and second (38) restraining surfaces of said tine clamp bracket (33) inhibiting lateral movement of said spring coils (23a, 23b).

9. The pick-up reel of claim 8, wherein the fastener is a bolt (32) and nut (32a).

10. The pick-up reel of any of claims 5 to 9, wherein said first (37) and second (38) restraining surfaces each include a first end (37a, 38a) and a second end (37b, 38b), each said first end (37a, 38a) inhibiting lateral deflection of said tine fingers (27a, 27b) in a first lateral direction, said second end (37b, 38b) inhibiting lateral deflection of said tine fingers (27a, 27b) in a lateral direction opposite said first lateral direction.

## Patentansprüche

1. Eine Aufnehmer-Zinkenhaspel (10) für eine landwirtschaftliche Maschine mit:
ersten (12) und zweiten (14) mit Abstand voneinander angeordneten und allgemein entgegengesetzten Endplatten, die für eine Drehung um eine gemeinsame lateral ausgerichtete Achse (18) angeordnet sind;
zumindest einer Zinkenstange (20), die sich zwischen den ersten und zweiten Endplatten für eine Drehung mit diesen erstreckt, um einen allgemein zylindrischen Drehpfad zu definieren;
einer Vielzahl von Zinken (22), die mit der Zinkenstange (20) verbunden sind, wobei jede Zinke (22) eine Befestigungs-Schleife (21) zur Befestigung an der Zinkenstange (20), einen Zinkenfinger (27a, 27b) und eine zwischen diesen angeordnete Federwendel (23, 23a, 23b) aufweist, wobei die Federwendel um eine Achse (100) allgemein parallel zu der gemeinsamen Achse (18) aufgewickelt ist;
wobei die Aufnehmer-Zinkenhaspel (10) weiterhin einen Zinken-Befestigungsbügel (25) zum Verbinden jeder der Anzahl von Zinken (22) mit der Zinkenstange (20) umfasst, wobei der Befestigungsbügel (25) einen ersten Teil (31) und einen zweiten Teil (33) umfasst, die in zusammenpassender Weise ineinander greifen und zwischen sich die Befestigungs-Schleife (21) in einer festen Position einklemmen,
**dadurch gekennzeichnet, dass** der erste Teil (31) eine erste Seitenfläche (39) aufweist, die für einen benachbarten Kontakt mit einer ersten Seite der Federwendel ausgerichtet ist, und der zweite Teil (33) eine Rückhaltefläche (37, 38) aufweist, die für einen benachbarten Kontakt mit einer zweiten Seite der Federwendel entgegengesetzt zu der ersten Seite ausgerichtet ist, wobei eine Bewegung jedes der Zinkenfinger lateral verhindert wird.

2. Die Aufnehmerhaspel nach Anspruch 1, bei der der zweite Teil ein erstes Ende (37) und ein zweites Ende (38) aufweist, wobei das erste Ende (37) eine laterale Auslenkung jedes der Zinkenfinger (27, 27a, 27b) in einer ersten lateralen Richtung (A) verhindert und das zweite Ende (38) eine laterale Auslenkung jedes der Zinkenfinger (27, 27a, 27b) in einer lateralen Richtung (B) entgegengesetzt zu der ersten Richtung verhindert.

3. Die Aufnehmerhaspel nach einem der vorhergehenden Ansprüche, bei der die Befestigungs-Schleife (21), die Federwendel (23, 23a, 23b) und der Zinkenfinger (27, 27a, 27b) aus einem kontinuierlichen langgestreckten Teil gebildet sind.

4. Die Aufnehmerhaspel nach einem der vorhergehenden Ansprüche, bei der die Federwendel (23) eine schraubenlinig gewickelte Wendel (23a, 23b) mit einem Umfang ist, und die Rückhaltefläche (37, 38) des zweiten Teils (33) in benachbarten Kontakt mit der zweiten Seite der Wendelfeder (23) steht und sich teilweise um den Umfang herum erstreckt, jedoch ein Hindurchführen des zweiten Teils (33) durch das Innere der schraubenlinienförmig gewickelten Wendel (23) bei der Installation ermöglicht.

5. Die Aufnehmerhaspel nach einem der vorhergehenden Ansprüche, bei der jede der Zinken (22) weiterhin erste (27a) und zweite (27b) Zinkenfinger und erste (23a) und zweite (23b) Federwwendeln umfasst, wobei die ersten (23a) und zweiten (23b) Federwwendeln durch die Befestigungs-Schleife (21) verbunden sind, wobei die erste Seitenfläche (39a, 39b) des ersten Teils (31) des Haltebügels (25) so angeordnet ist, dass sie zwischen die nach innen gerichteten Oberflächen der ersten (23a) und zweiten (23b) Federwwendeln passt und mit diesen in benachbartem Kontakt steht, und dass der zweite Teil (33) des Befestigungsbügels (25) erste (37) und zweite (38) Rückhalteflächen aufweist, die für einen benachbarten Kontakt mit nach außen gerichteten Oberflächen der ersten (23a) und zweiten (23b) Federwendeln ausgerichtet sind.

6. Die Aufnehmerhaspel nach Anspruch 5, bei der der erste Teil des Zinken-Befestigungsbügels (25) ein Zinkenstangen-Haltebügel (31) mit einer zur Aufnahme eines Teils der Befestigungs-Schleife (21) konfigurierten Ausnehmung ist, die zwischen allgemein parallelen und mit Abstand voneinander angeordneten ersten (39a) und zweiten (39b) Seitenflächen angeordnet ist, wobei die Seitenflächen so angeordnet sind, dass sie zwischen die nach innen gerichteten Oberflächen der ersten (23a) und der zweiten (23b) Federwendeln passen und mit diesen in benachbartem Kontakt stehen.

7. Die Aufnehmerhaspel nach Anspruch 5 oder 6, bei der der zweite Teil des Zinken-Befestigungsbügels (25) ein Zinken-Klemmbügel (33) mit einer ersten (37) und einer zweiten (38) Rückhaltefläche ist, die für einen benachbarten Kontakt mit nach außen gerichteten Oberflächen der ersten (23a) und der zweiten (23b) Federwendel ausgerichtet sind.

8. Die Aufnehmerhaspel nach Anspruch 7, bei der der Befestigungsbügel (25) weiterhin ein Befestigungsmittel (32, 32a) zur Befestigung des Zinkenstangen-Haltebügels (31 a) und des Zinken-Klemmbügels (33) an der Zinkenstange (20) umfasst, wobei die Befestigungs-Schleife (21) in der Ausnehmung durch den Zinken-Klemmbügel (33) festgeklemmt wird, wobei die ersten (39a) und zweiten (39b) Seitenflächen des Zinkenstangen-Bügels (31) und die ersten (37) und zweiten (38) Halteoberflächen des Zinken-Klemmbügels (33) eine seitliche Bewegung der Federwendeln (23a, 23b) verhindern.

9. Die Aufnehmerhaspel nach Anspruch 3, bei der das Befestigungsmittel eine Schraube (32) und Mutter (32a) ist.

10. Die Aufnehmerhaspel nach einem der Ansprüche 5 bis 9, bei der die ersten (37) und zweiten (38) Rückhalteflächen jeweils ein erstes Ende (37a, 38a) und ein zweites Ende (37b, 38b) einschließen, wobei jedes erste Ende (37a, 37b) eine laterale Auslenkung der Zinkenfinger (27a, 27b) in einer ersten lateralen Richtung verhindert, und das zweite Ende (37b, 38b) eine laterale Auslenkung der Zinkenfinger (27a, 27b) in einer lateralen Richtung entgegengesetzt zu der ersten lateralen Richtung verhindert.

## Revendications

1. Rabatteur à dents de ramasseur (10) pour une machine agricole comprenant :
des première (12) et seconde (14) plaques terminales espacées et généralement opposées agencées pour tourner autour d'un axe commun, latéralement aligné (18),
au moins une barre de dents (20) s'étendant entre les dites première et seconde plaques terminales pour tourner avec celles-ci pour définir une trajectoire de rotation généralement cylindrique, et
une pluralité de dents (22) connectées à la dite barre de dents (20), chaque dent (22) comportant une boucle de montage (21) pour une fixation à la dite barre de dents (20), un doigt de dent (27, 27a, 27b) et un ressort hélicoïdal (23, 23a, 23b) disposé entre ceux-ci, ledit ressort hélicoïdal étant enroulé autour d'un axe (100) généralement parallèle au dit axe commun (18), le rabatteur à dents de ramasseur (10) comprenant en plus un support de fixation de dent (25) pour connecter chacune de la pluralité de dents (22) à ladite barre de dents (20), et ledit support de fixation (25) comprenant une première partie (31) et une seconde partie (33) conçues pour engager et serrer de manière appariée ladite boucle de montage (21) dans une position fixe entre celles-ci,
**caractérisé en ce que** ladite première partie (31) comporte une première surface latérale (39) orientée pour un contact adjacent avec un premier côté du dit ressort hélicoïdal et ladite seconde partie (33) comporte une surface de retenue (37, 38) orientée pour un contact adjacent avec un second côté du dit ressort hélicoïdal opposé au premier côté, au moyen de quoi le mouvement de chaque doigt de dent est entravé latéralement.

2. Rabatteur de ramasseur (10) selon la revendication 1, **caractérisé en ce que** ladite seconde partie (33) inclut une première extrémité (37) et une seconde extrémité (38), ladite première extrémité (37) empêchant une déflexion latérale de chaque doigt de dent (27, 27a, 27b) dans une première direction latérale (A), et ladite seconde extrémité (38) empêchant une déflexion latérale de chaque doigt de dent (27, 27a, 27b) dans une direction latérale (B) opposée à ladite première direction latérale (A).

3. Rabatteur de ramasseur selon l'une quelconque des revendications précédentes, **caractérisé en ce que** ladite boucle de montage (21), ledit ressort hélicoïdal (23, 23a, 23b), et ledit doigt de dent (27, 27a, 27b) sont formés à partir d'un élément oblong continu.

4. Rabatteur de ramasseur selon l'une quelconque des revendications précédentes, **caractérisé en ce que** ledit ressort hélicoïdal (23) est un ressort enroulé en hélice (23a, 23b) présentant une circonférence et ladite surface de retenue (37, 38) de ladite seconde partie (33) est en contact adjacent avec ledit second côté du dit ressort hélicoïdal (23) et s'étend partiellement autour de ladite circonférence en permettant cependant à ladite seconde partie (33) d'être passée à travers l'intérieur du dit ressort hélicoïdal (23) lors du montage.

5. Rabatteur de ramasseur selon l'une quelconque des revendications précédentes, **caractérisé en ce que** chacune de ladite pluralité des dents (22) comprend en plus des premier (27a) et second (27b) doigts de dent et des premier (23a) et second (23b) ressorts hélicoïdaux, les dits premier (23a) et second (23b) ressorts hélicoïdaux étant connectés par ladite boucle de montage (21), ladite première surface latérale (39a, 39b) de ladite première partie (31) dudit support de fixation (25) étant agencée pour s'ajuster entre et en contact adjacent avec les surfaces tournées vers l'intérieur des dits premier (23a) et second (23b) ressorts hélicoïdaux, et ladite seconde partie (33) du dit support de fixation (25) comportant des première (37) et seconde (38) surfaces de retenue orientées pour un contact adjacent avec les surfaces tournées vers l'extérieur des dits premier (23a) et second (23b) ressorts hélicoïdaux.

6. Rabatteur de ramasseur selon la revendication 5, **caractérisé en ce que** ladite première partie du dit support de fixation de dent (25) est un support de barre de dents (31) comportant un réceptacle conçu pour recevoir une partie de ladite boucle de montage (21) agencé entre des première (39a) et seconde (39b) surfaces latérales généralement parallèles et espacées, lesdites surfaces latérales étant agencées pour s'ajuster entre et en contact adjacent avec les surfaces orientées vers l'intérieur des dits premier (23a) et second (23b) ressorts hélicoïdaux.

7. Rabatteur de ramasseur selon la revendication 5 ou 6, **caractérisé en ce que** ladite seconde première partie du dit support de fixation de dent (25) est une fixation de serrage de dent (33) comportant une première (37) et une seconde (38) surfaces de retenue orientées pour un contact adjacent avec les surfaces tournées vers l'extérieur des dits premier (23a) et second (23b) ressorts hélicoïdaux.

8. Rabatteur de ramasseur selon la revendication 7, **caractérisé en ce que** le support de fixation (25) comprend en plus un élément de fixation (32, 32a) fixant ledit support de barre de dents (31) et ladite fixation de serrage de dent (33) à ladite barre de dents (20), ladite boucle de montage (21) étant serrée dans ledit réceptacle par ladite fixation de serrage de dent (33), et les dites première (39a) et seconde (39b) surfaces latérales du dit support de barre de dent (31) et les dites première (37) et seconde (38) surfaces de retenue de ladite fixation de serrage de dent (33) empêchant un mouvement latéral des dits ressorts hélicoïdaux (23a, 23b).

9. Rabatteur de ramasseur selon la revendication 8, **caractérisé en ce que** l'élément de fixation est un boulon (32) et un écrou (32a).

10. Rabatteur de ramasseur selon l'une quelconque des revendications 5 à 9, **caractérisé en ce que** lesdits première (37) et seconde (38) surfaces de retenue incluent chacune une première extrémité (37a, 38a) et une seconde extrémité (37b, 38b), chaque dite première extrémité (37a, 38a) empêchant une déflexion latérale des dits doigts de dent (27a, 27b) dans une première direction latérale, et chaque seconde extrémité empêchant une déflexion latérale desdits doigts de dent (27a, 27b) dans une direction latérale opposée à ladite première direction latérale.
